# EUROPEAN PATENT SPECIFICATION

(11) **EP 3 208 493 B1**
(45) Date of publication and mention of the grant of the patent: **07.12.2022**
(21) Application number: 17155976.8
(22) Date of filing: 14.02.2017
(51) Int. Cl.: F16H 1/10, F16H 57/00

(54) **DRIVE DEVICE FOR DRIVING POWER GENERATOR DEVICE**
ANTRIEBSVORRICHTUNG ZUM ANTREIBEN EINER STROMGENERATORVORRICHTUNG
DISPOSITIF D'ENTRAÎNEMENT POUR ENTRAÎNER UN DISPOSITIF GÉNÉRATEUR DE PUISSANCE

(30) Priority: 19.02.2016 JP 2016029976
(43) Date of publication of application: 23.08.2017
(73) Proprietor: Nabtesco Corporation, Tokyo 102-0093 (JP)
(72) Inventor: HOSODA, Shigeru, Fuwa-gun Gifu 503-2121 (JP)
(74) Representative: Grünecker Patent- und Rechtsanwälte PartG mbB

(56) References cited:
- EP-A1- 1 662 138
- EP-A1- 2 811 193
- JP-A- 2005 233 055
- US-A1- 2012 282 018
- US-A1- 2015 013 489

## Description

### Technical Field

The present invention relates to a drive device for driving a driven gear situated on a movable portion of a power generator device in accordance with the preamble of independent claim 1.

### Background Art

Such a drive device in accordance with the preamble of claim 1 is known from EP 1 662 138 A1, which is therefore considered to be the closest prior art. In detail, the drive device (yaw drive apparatus) known from EP 1 662 138 A1 comprises a drive gear (pinion gear) configured to be meshed with a driven gear and being formed with a through-hole, and a drive portion including a rotary shaft portion (carrier) inserted into the through-hole and being spline-connected to the drive gear (pinion gear), and a drive source (motor) generating a driving force for rotating the rotary shaft portion (carrier).

In the prior art shaft-gear connection according to US 2012/282018 A1, a gear is shrunk-fit to a shaft so as to permanently and constantly rotate with the shaft. The gear comprises an axial first section and an axial second section, and an intermediate section is provided between the axial first section and the axial second section. The strength of the shrink fit bond in the intermediate section is less than the strength of the shrink fit bond in the second section but greater than the strength of the shrink-fit bond in the first section. Thus, the adhesion or bond strength between the gear and the shaft gradually and progressively decreases in strength across the entire axial length of the intermediate section from the second section to the first section.

In addition, there is a variety of known power generator devices which convert kinetic energy of fluid to electrical energy. For instance, a windmill device converts kinetic energy of air to electrical energy (c.f. JP 2013-209991 A and JP 2005-233055 A). JP 2013-209991 A and JP 2005-233055 A disclose a spline connection structure between a pinion and a shaft of a speed reducer, the pinion being configured to mesh with a ring gear of a windmill device.

Since a power generator device has to continuously generate electric power (e.g. for twenty years or longer), a maintenance-free structure is required for the power generator device as compared with a general machinery facility. If a general spline connection structure is used for driving the power generator device, there is a variety of inconvenience which requires maintenance because of a positional displacement between a pinion and a shaft (e.g. fretting).

The techniques disclosed in JP 2013-209991 A use a general spline connection structure, but do not address the problem about the positional displacement between a pinion and a shaft. On the other hand, the techniques disclosed in JP 2005-233055 A try to reduce subtle sliding of a pinion in an extending direction of a rotational axis of a shaft. Therefore, there is a reduction in fretting wear of spline teeth (internal teeth and external teeth) for use in connection between a pinion and a shaft. This means high reliability of a power generator device. However, the techniques disclosed in JP 2005-233055 A do not contribute to a reduction of a positional displacement in a direction other than the extending direction of the rotational axis of the shaft.

The inventors newly found a problem that an excessively large load may locally act on a pinion and/or a gear of a power generator device which meshes with the pinion when the pinion is tilted with respect to an orthogonal axis orthogonal to a rotational axis of a shaft.

### Summary of Invention

An object of the present invention is to provide a drive device having a structure configured to reduce a tilt of a gear with respect to an orthogonal axis orthogonal to a rotational axis of a shaft.

This object is solved according to the present invention by providing a drive device having the features of independent claim 1. Preferred embodiments of the invention are defined in the dependent claims.

A drive device according to one aspect drives a driven gear situated on a movable portion of a power generator device which generates electric power according to a change in a flow direction of fluid. The drive device includes a drive gear which meshes with the driven gear; and a drive portion including a rotary shaft portion inserted into a through-hole, which is formed in the drive gear, the rotary shaft being connected to the drive gear by spline connection or key connection. The drive gear includes an inner wall surface configured to form a contour of the through-hole. The rotary shaft portion comes into contact with and is pressed against the inner wall surface in a direction orthogonal to a rotational axis of the rotary shaft portion on a first imaginary plane orthogonal to the rotational axis and a second imaginary plane away from the first imaginary plane in an extending direction of the rotational axis.

A drive device according to another aspect drives a driven gear situated on a movable portion of a power generator device which generates electric power according to a change in a flow direction of fluid. The drive device includes a drive gear configured to mesh with the driven gear; and a drive portion including a rotary shaft portion inserted into a through-hole which is formed in the drive gear. At least one of the rotary shaft portion and the drive gear includes a press fit structure configured to suppress a tilt of the drive gear with respect to an orthogonal axis orthogonal to a rotational axis of the rotary shaft portion.

The aforementioned techniques may reduce a tilt of a gear with respect to an orthogonal axis orthogonal to a rotational axis of a shaft.

These and other objects, features and advantages of the aforementioned drive device will become more apparent upon reading the following detailed description along with the accompanying drawings.

### Brief Description of Drawings

FIG. 1 is a schematic partially sectional view of a drive device according to the first embodiment;
FIG. 2 is a schematic partially sectional view of a connection structure according to the second embodiment;
FIG. 3 is a schematic partially sectional view of a connection structure according to the third embodiment;
FIG. 4 is a schematic perspective view of an exemplary windmill device in which a drive device is incorporated (the fourth embodiment);
FIG. 5 is a schematic sectional view of the drive device according to the fourth embodiment; and
FIG. 6 is a schematic partially sectional view of the windmill device shown in FIG. 4.

### Description of Embodiments

Various embodiments of a drive device are described below with reference to the accompanying drawings. Techniques about the drive device are clearly comprehensible by the following description. The drive device is advantageously used for driving a movable portion of a power generator device which generates electric power according to a change in a flow direction of fluid (gas or liquid). A windmill device exemplified as the power generator device has high reliability by the following technical principles.

### <First Embodiment>

A rotary shaft portion configured to input a driving force for driving a movable portion of a power generator device is inserted into a through-hole, which is formed in a drive gear configured to mesh with a driven gear, the driven gear being situated on the movable portion of the power generator device. In many cases, the through-hole is larger in cross-section than the rotary shaft portion so as to easily insert the rotary shaft portion into the through-hole. This causes play between the drive gear and the rotary shaft portion. The play between the drive gear and the rotary shaft portion results in a tilt of the drive gear with respect to an orthogonal axis orthogonal to a rotational axis of the rotary shaft portion. The inventors found a problem that the tilt of the drive gear with respect to an orthogonal axis may result in wear or damage of the drive gear and/or the driven gear. Techniques for reducing a tilt of a drive gear with respect to an orthogonal axis are described in the first embodiment.

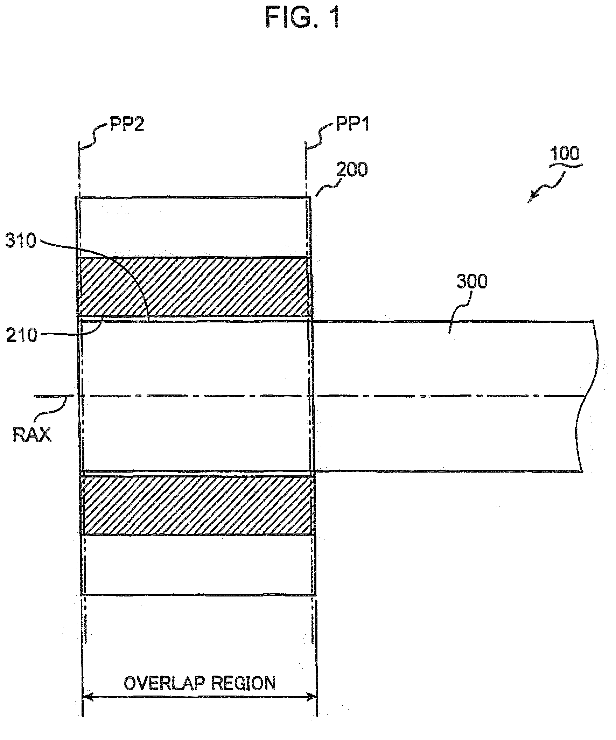

FIG. 1 is a schematic partial sectional view of a drive device 100 according to the first embodiment. The drive device 100 is described with reference to FIG. 1.

The drive device 100 includes a pinion 200 and a drive portion. The pinion 200 meshes with a driven gear (not shown) situated on a movable portion (not shown) of a power generator device (not shown) which generates electric power according to a change in a flow direction of fluid (gas or liquid). With regard to the present embodiment, the drive gear is exemplified by the pinion 200.

FIG. 1 schematically shows a shaft 300 as the drive portion. The drive portion may include a drive source (e.g. a motor (not shown)) in addition to the shaft 300, the drive source being configured to generate a driving force for rotating the pinion 200. The drive portion may further include a speed reduction mechanism (not shown) which increases the driving force. The principles of the present embodiment are not limited to a specific overall structure of the drive portion.

With regard to the present embodiment, the rotary shaft portion is exemplified by the shaft 300. The shaft 300 may be an output shaft of a motor. Alternatively, the shaft 300 may be an output shaft of a speed reducer. Further alternatively, the shaft 300 may be used as a part of another transmission mechanism which transmits a driving force generated by a motor.

The shaft 300 is inserted into a through-hole formed in the pinion 200. The shaft 300 may be formed as a spline shaft. In this case, a spline hole is formed in the pinion 200 as the through-hole. Alternatively, the shaft 300 may be connected to the pinion 200 by a key. In this case, a key groove is formed in the pinion 200 together with the through-hole. Further alternatively, another structure may be used for transmitting a driving force from the shaft 300 to the pinion 200. The principles of the present embodiment are not limited to a specific structure for transmitting a driving force between the shaft 300 and the pinion 200.

The pinion 200 is integrally rotated with the shaft 300. Accordingly, the driving force is transmitted to a driven gear which meshes with the pinion 200. When the driving force is transmitted to the driven gear, the movable portion of the power generator device is driven.

The pinion 200 includes an inner wall surface 210 which forms a contour of the through-hole. The shaft 300 includes a peripheral surface 310 adjacent to the inner wall surface 210.

FIG. 1 shows a rotational axis RAX of the shaft 300, and two imaginary planes PP1, PP2. Both of the imaginary planes PP1, PP2 are orthogonal to the rotational axis RAX. The imaginary plane PP2 is distant from the imaginary plane PP1 in an extending direction of the rotational axis RAX. The peripheral surface 310 of the shaft 300 comes into contact with and is pressed against the inner wall surface 210 of the pinion 200 in a direction orthogonal to the rotational axis RAX on the imaginary planes PP1, PP2. With regard to the present embodiment, the first imaginary plane is exemplified by the imaginary plane PP1. The second imaginary plane is exemplified by the imaginary plane PP2.

The imaginary planes PP1, PP2 are situated on an overlap region in which the shaft 300 overlaps with the pinion 200. The imaginary planes PP1, PP2 may be situated at both ends of the overlap region. Alternatively, the imaginary planes PP1, PP2 may be situated at inner positions than the both ends of the overlap region. The principles of the present embodiment are not limited to specific positions of the imaginary planes PP1, PP2.

The shaft 300 may be larger in diameter than the through-hole of the pinion 200 on the imaginary planes PP1, PP2 whereas the shaft 300 may be smaller in diameter than the through-hole of the pinion 200 in a region between the imaginary planes PP1, PP2. In this case, the shaft 300 is easily inserted into the through-hole of the pinion 200.

Alternatively, the shaft 300 may be larger in diameter than the through-hole of the pinion 200 in the whole region between the imaginary planes PP1, PP2. In this case, the shaft 300 is brought to a press fit state in the whole region between the imaginary planes PP1, PP2. When the shaft 300 is a spline shaft, techniques of the large diameter alignment are advantageously used for forming an overall press fit state.

### <Second Embodiment>

A designer designing a drive device may design various connection structures in which a pinion and a shaft are connected on the basis of the technical principles described in the context of the first embodiment. An exemplary connection structure is described in the second embodiment.

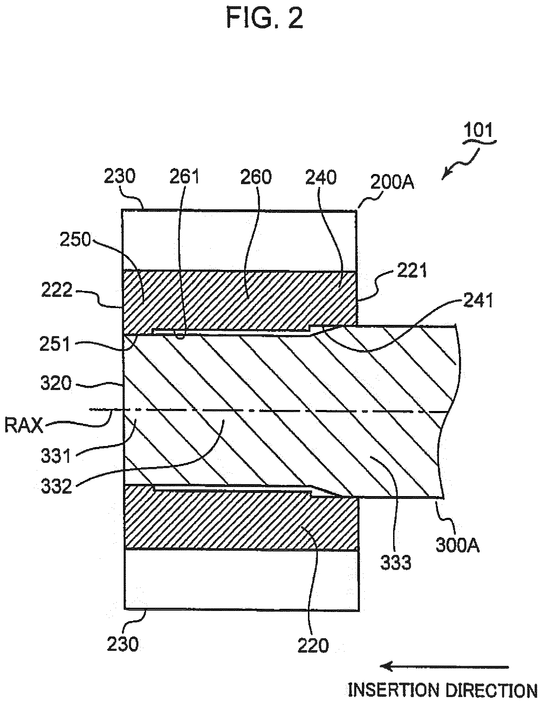

FIG. 2 is a schematic partial sectional view of a connection structure 101 according to the second embodiment. The connection structure 101 is described with reference to FIGS. 1 and 2. The description of the first embodiment is applied to elements indicated with the same reference numerals as those of the first embodiment.

FIG. 2 shows a pinion 200A and a shaft 300A as the connection structure 101. The pinion 200A corresponds to the pinion 200 described with reference to FIG. 1. The description about the pinion 200 may be applied to the pinion 200A. The shaft 300A corresponds to the shaft 300 described with reference to FIG. 1. The description about the shaft 300 may be applied to the shaft 300A.

The pinion 200A includes a tubular primary portion 220 and external teeth 230. The external teeth 230 radially project from the primary portion 220 so as to mesh with a driven gear (not shown) of a power generator device (not shown).

The primary portion 220 includes a first surface 221, and a second surface 222 opposite to the first surface 221. The first and second surfaces 221, 222 are generally orthogonal to the rotational axis RAX of the shaft 300A. The second surface 222 is distant from the first surface 221 by a thickness of the pinion 200A. The first surface 221 corresponds to the imaginary plane PP1 described with reference to FIG. 1. The description about the imaginary plane PP1 may be applied to the first surface 221. The second surface 222 corresponds to the imaginary plane PP2 described with reference to FIG. 1. The description about the imaginary plane PP2 may be applied to the second surface 222.

The shaft 300A is inserted into the primary portion 220 from an insertion opening which is formed in the first surface 221. The shaft 300A includes a distal end surface 320. The distal end surface 320 is smaller in diameter than the shaft 300A at a position in correspondence to the first surface 221. The distal end surface 320 is exposed in an opening portion (the opening portion appears on the second surface 222), the opening portion being opposite to the insertion opening. The distal end surface 320 is substantially flush with the second surface 222. With regard to the present embodiment, the rotary shaft portion is exemplified by the shaft 300A.

The primary portion 220 is conceptually divided into a first annular portion 240, a second annular portion 250 and a third annular portion 260. The third annular portion 260 is situated between the first and second annular portions 240, 250.

The first annular portion 240 includes the first surface 221. In addition, the first annular portion 240 includes an inner wall surface 241 which forms a substantially circular contour. The inner wall surface 241 forms a contour of the insertion opening. With regard to the present embodiment, the first inner wall surface is exemplified by the inner wall surface 241.

The second annular portion 250 includes the second surface 222. In addition, the second annular portion 250 includes an inner wall surface 251 which forms a substantially circular contour. The inner wall surface 251 forms a contour of the opening portion in which the distal end surface 320 of the shaft 300A appears. The substantially circular opening portion formed by the inner wall surface 251 is smaller in diameter than the insertion opening. With regard to the present embodiment, the second inner wall surface is exemplified by the inner wall surface 251.

The third annular portion 260 includes an inner wall surface 261. Unlike the inner wall surfaces 241, 251, the inner wall surface 261 forms a contour of a spline hole. The shaft 300A is spline-connected to the third annular portion 260.

The inner wall surfaces 241, 251, 261 correspond to the inner wall surface 210 described with reference to FIG. 1. The description about the inner wall surface 210 may be applied to the inner wall surfaces 241, 251, 261.

The shaft 300A includes a distal end portion 331, an intermediate portion 332 and a proximal end portion 333. The distal end portion 331 is surrounded by the second annular portion 250. The distal end portion 331 includes the distal end surface 320. The intermediate portion 332 is surrounded by the third annular portion 260. The intermediate portion 332 forms a spline shaft complementary to the spline hole, which is formed by the inner wall surface 261 of the third annular portion 260. Techniques for the tooth surface alignment may be applied to the spline connection between the intermediate portion 332 and the third annular portion 260. The proximal end portion 333 is surrounded by the first annular portion 240. The proximal end portion 333 may include a rounded portion resultant from spline processing for the intermediate portion 332.

A diameter of the distal end portion 331 is slightly larger than an inner diameter of the second annular portion 250 (i.e. the diameter of the opening portion). Therefore, a peripheral surface of the distal end portion 331 comes into contact with and is pressed against the inner wall surface 251 of the second annular portion 250. With regard to the present embodiment, the second press fit portion is exemplified by the distal end portion 331.

A diameter of the proximal end portion 333 is slightly larger than an inner diameter of the first annular portion 240 (i.e. a diameter of the insertion opening). Therefore, a peripheral surface of the proximal end portion 333 comes into contact with and is pressed against the inner wall surface 241 of the first annular portion 240. With regard to the present embodiment, the first press fit portion is exemplified by the proximal end portion 333.

Since the techniques for the tooth surface alignment are applied to the spline connection between the intermediate portion 332 and the third annular portion 260 as described above, an axial outer diameter of the intermediate portion 332 may be smaller than a core diameter of a hole of the third annular portion 260. Therefore, a gap is formed between the axial outer diameter of the intermediate portion 332 and the core diameter of the hole of the third annular portion 260. Accordingly, a pressing force between the intermediate portion 332 and the inner wall surface 261 of the third annular portion 260 (i.e. a force acting in a direction orthogonal to the rotational axis RAX) becomes smaller than a pressing force between the distal end portion 331 and the inner wall surface 251 of the second annular portion 250, and a pressing force between the proximal end portion 333 and the inner wall surface 241 of the first annular portion 240. Consequently, the shaft 300A is smoothly inserted into the pinion 200A.

### <Third Embodiment>

A designer designing a drive device may give a connection structure a function of preventing a pinion from falling off from a shaft. An exemplary connection structure having a function of preventing a pinion from falling off is described in the third embodiment.

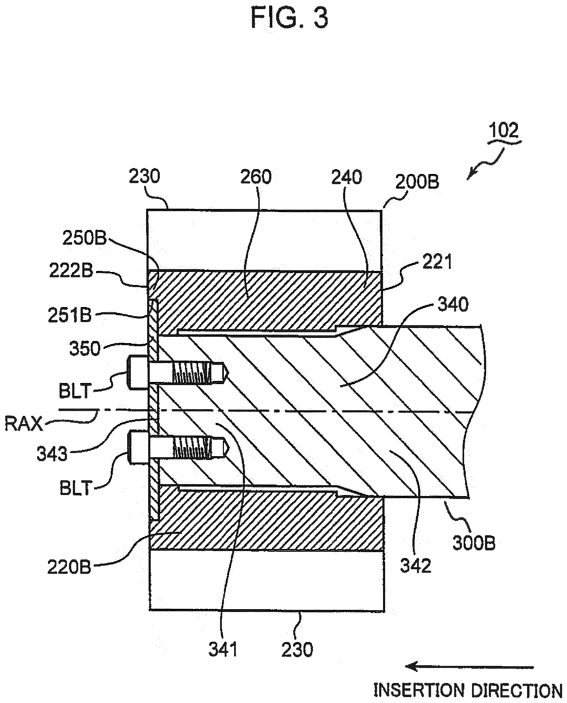

FIG. 3 is a schematic partial sectional view of a connection structure 102 according to the third embodiment. The connection structure 102 is described with reference to FIGS. 1 and 3. The description of the second embodiment is applied to elements indicated with the same reference numerals as those of the second embodiment.

FIG. 3 shows a pinion 200B and a shaft assembly 300B as the connection structure 102. The pinion 200B corresponds to the pinion 200 described with reference to FIG. 1. The description about the pinion 200 may be applied to the pinion 200B. The shaft assembly 300B corresponds to the shaft 300 described with reference to FIG. 1. The description about the shaft 300 may be applied to the shaft assembly 300B.

Like the second embodiment, the pinion 200B includes the external teeth 230. The description of the second embodiment is applied to the external teeth 230.

The pinion 200B further includes a tubular primary portion 220B. Like the second embodiment, the primary portion 220B includes the first and third annular portions 240, 260. The description of the second embodiment is applied to these elements.

The primary portion 220B further includes a second annular portion 250B. The second annular portion 250B includes a second surface 222B opposite to the first surface 221 of the first annular portion 240. Unlike the second embodiment, an opening portion is formed in the second surface 222B, the opening portion being larger in diameter than the insertion opening formed in the first surface 221.

The second annular portion 250B further includes an inner wall surface 251B which forms a substantially circular contour. The inner wall surface 251B forms a contour of the opening portion. The second annular portion 250B forms a recessed portion in cooperation with the third annular portion 260, the recessed portion being continuous from the opening portion.

The shaft assembly 300B includes a shaft 340 and a disc plate 350. The shaft 340 is inserted into the pinion 200B from the insertion opening formed in the first surface 221. The shaft 340 includes a spline portion 341 and a proximal end portion 342. The spline portion 341 is surrounded by the third annular portion 260. The spline portion 341 forms a spline shaft complementary to a spline hole which is formed in the inner wall surface 261 of the third annular portion 260. Techniques of the tooth surface alignment may be applied to the spline connection between the spline portion 341 and the third annular portion 260. The proximal end portion 342 is surrounded by the first annular portion 240. The proximal end portion 342 may include a rounded portion resultant from spline processing for the spline portion 341. In the present embodiment, the rotary shaft portion is exemplified by the shaft assembly 300B.

The spline portion 341 includes a distal end surface 343. The distal end surface 343 is substantially orthogonal to the rotational axis RAX of the shaft assembly 300B. A screw hole or another structure (e.g. a pinhole) for use in connection to the disc plate 350 is formed in the distal end surface 343.

The disc plate 350 is situated in the recessed portion. As shown in FIG. 3, bolts BLT extend through through-holes formed in the disc plate 350, so that the bolts BLT are engaged in screw holes formed in the distal end surface 343. Accordingly, the disc plate 350 is fixed to the distal end surface 343 of the spline portion 341. With regard to the present embodiment, the plate member is exemplified by the disc plate 350.

A diameter of the disc plate 350 is slightly larger than an inner diameter of the second annular portion 250B (i.e. a diameter of the opening portion). Therefore, a peripheral surface of the disc plate 350 comes into contact with and is pressed against the inner wall surface 251B of the second annular portion 250B. With regard to the present embodiment, the second press fit portion is exemplified by the disc plate 350.

A diameter of the proximal end portion 342, which is distant from the disc plate 350 by a length of the spline portion 341, is slightly larger than an inner diameter of the first annular portion 240 (i.e. a diameter of the insertion opening). Therefore, the peripheral surface of the proximal end portion 342 comes into contact with and is pressed against the inner wall surface 241 of the first annular portion 240. With regard to the present embodiment, the first press fit portion is exemplified by the proximal end portion 342.

As shown in FIG. 3, the disc plate 350 radially projects from the distal end surface 343 of the spline portion 341. Therefore, the disc plate 350 may prevent the pinion 200B from falling off from the shaft 340.

### <Fourth Embodiment>

The technical principles described in the context of the aforementioned embodiments may be advantageously used in driving a movable portion of a power generator device which generates electric power according to a change in a flow direction of fluid (gas or liquid). A drive device which drives a windmill device functioning as the power generator device is described in the fourth embodiment.

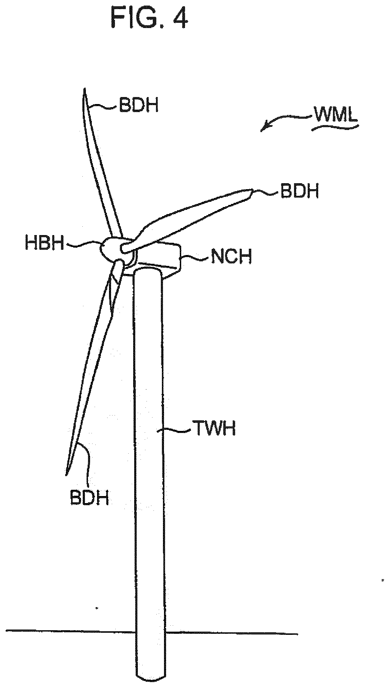

FIG. 4 is a schematic perspective view of an exemplary windmill device WML in which a drive device is incorporated. The windmill device WML is described with reference to FIG. 4.

The windmill device WML includes a tower TWH, a nacelle NCH, a hub HBH and three blades BDH. The tower TWH stands upright from the ground. The nacelle NCH is mounted on the upper end of the tower TWH. The nacelle NH is rotated around a vertical axis on the upper end of the tower TWH. A drive device designed on the basis of the principles of the aforementioned embodiments may be used for a rotational motion of the nacelle NCH on the upper end of the tower TWH. The hub HBH is mounted on the nacelle NCH. The hub HBH is rotated by wind power received by the windmill device WML. The three blades BDH radially extend from the hub HBH. Each of the blades BDH is rotated around an axis along the extending direction of each of the blades BDH on the hub HBH. A drive device designed on the basis of the principles of the first embodiment may be used for the rotational motion of each of the blades BDH on the hub HBH.

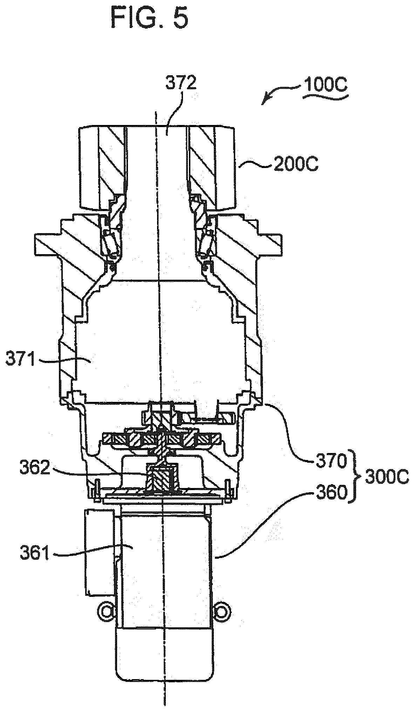

FIG. 5 is a schematic sectional view of a drive device 100C according to the fourth embodiment. The drive device 100C is described with reference to FIGS. 1 and 5.

The drive device 100C is situated in the hub HBH and/or the blades BDH. The drive device 100C generates a rotational force for rotating the blades BDH on the hub HBH.

The drive device 100C includes a pinion 200C and a drive portion 300C. The drive portion 300C includes an electric motor 360 and a speed reducer 370. A rotational force generated by the electric motor 360 is transmitted to the pinion 200C through the speed reducer 370. The pinion 200C corresponds to the pinion 200 described with reference to FIG. 1.

The electric motor 360 includes a main housing 361 and a rotary shaft 362. The rotary shaft 362 projects from the main housing 361, so that the rotary shaft 362 is connected to the speed reducer 370. The rotary shaft 362 is rotated by a rotational force which is generated by electromagnetic induction in the main housing 361. The rotation of the rotary shaft 362 is transmitted to the speed reducer 370.

The speed reducer 370 includes a speed reduction mechanism 371 and an output shaft 372. The speed reduction mechanism 371 may have the same structure as structures of various speed reducers (e.g. a planetary gear speed reducer or an eccentric speed reducer). Therefore, the principles of the present embodiment are not limited to a specific structure of the speed reduction mechanism 371.

The speed reduction mechanism 371 is connected to the rotary shaft 362 of the electric motor 360. The speed reduction mechanism 371 reduces a rotational speed of the electric motor 360, and increases a torque of the electric motor 360. The increased torque is transmitted from the speed reduction mechanism 371 to the output shaft 372. Accordingly, the output shaft 372 is rotated at a rotational speed lower than a rotational speed of the rotary shaft 362 of the electric motor 360. The output shaft 372 corresponds to the shaft 300 described with reference to FIG. 1.

The pinion 200C is mounted on the output shaft 372 according to the principles of the aforementioned embodiments. The pinion 200C is integrally rotatable with the output shaft 372.

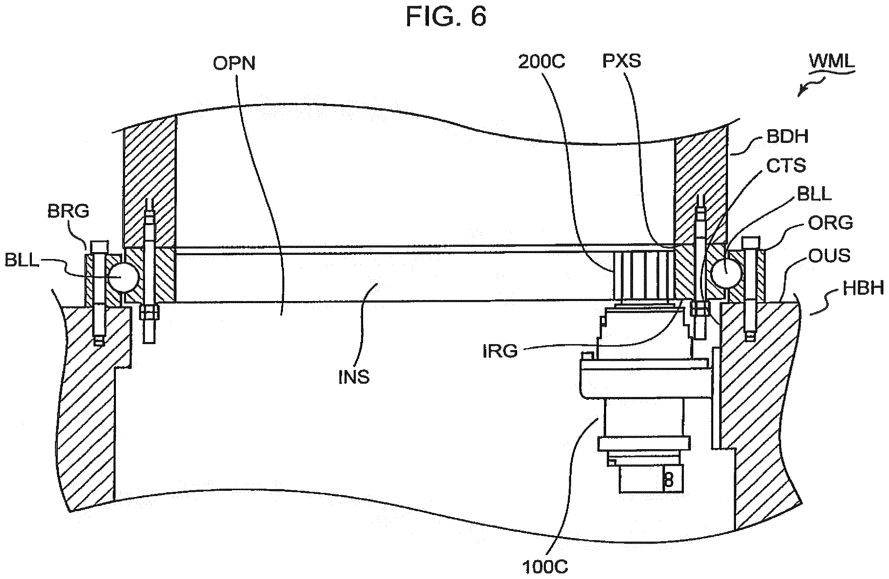

FIG. 6 is a schematic sectional view of the windmill device WML around a boundary between the hub HBH and one of the blades BDH. An exemplary layout of the drive device 100C is described with reference to FIGS. 5 and 6.

An opening portion OPN is formed in the hub HBH. The hub HBH includes a contour surface CTS which forms a contour of the opening portion OPN. The drive device 100C is fixed to the contour surface CTS.

The windmill device WML includes a ball bearing BRG. The ball bearing BRG is situated between the hub HBH and the blade BDH.

The hub HBH includes an outer surface OUS which forms the outer contour of the hub HBH. The blade BDH includes a proximal end surface PXS facing the opening OPN. The ball bearing BRG includes an outer ring portion ORG, an inner ring portion IRG and balls BLL. The outer ring portion ORG is fixed to the outer surface OUS. The inner ring portion IRG situated in the outer ring portion ORG is fixed to the proximal end surface PXS. The balls BLL roll between the outer ring portion ORG and the inner ring portion IRG, which is substantially concentric with the outer ring portion ORG. Therefore, the inner ring portion IRG may rotate in the outer ring portion ORG. The blade BDH is rotated together with the inner ring portion IRG. With regard to the present embodiment, the movable portion is exemplified by the blade BDH.

The inner ring portion IRG includes an inner surface INS opposite to the balls BLL. A ring gear is formed on the inner surface INS. The pinion 200C meshes with the ring gear formed on the inner surface INS. Therefore, the inner ring portion IRG and the blade BDH may rotate together with the pinion 200C. With regard to the present embodiment, the driven gear is exemplified by the ring gear formed on the inner surface INS.

A part or all of the principles of the aforementioned embodiments may be combined or modified in order to meet performance required for a power generator device. With regard to the aforementioned embodiments, a movable portion of a windmill device receives a driving force from a pinion via a ring gear. Alternatively, a movable portion may be directly connected to a pinion (i.e. a direct-drive method may be employed).

The drive devices described in the context of the aforementioned embodiments mainly include the following features.

A drive device according to one aspect of the aforementioned embodiments drives a driven gear situated on a movable portion of a power generator device which generates electric power according to a change in a flow direction of fluid. The drive device includes a drive gear configured to mesh with the driven gear; and a drive portion including a rotary shaft portion inserted into a through-hole, which is formed in the drive gear, the rotary shaft portion being connected to the drive gear by spline connection or key connection. The drive gear includes an inner wall surface which forms a contour of the through-hole. The rotary shaft portion comes into contact with and is pressed against the inner wall surface in a direction orthogonal to a rotational axis of the rotary shaft portion on a first imaginary plane orthogonal to the rotational axis and a second imaginary plane away from the first imaginary plane in an extending direction of the rotational axis.

According to the aforementioned configuration, since the rotary shaft portion comes into contact with and is pressed against the inner wall surface in a direction orthogonal to the rotational axis of the rotary shaft portion on the first imaginary plane orthogonal to the rotational axis and the second imaginary plane away from the first imaginary plane in the extending direction of the rotational axis, the drive gear is less likely to be tilted with respect to the orthogonal axis orthogonal to the rotational axis of the rotary shaft portion. Accordingly, an excessively large load is less likely to act on the drive gear and/or the driven gear. Therefore, the power generator device may have high reliability without maintenance for a long time.

With regard to the aforementioned configuration, the rotary shaft portion may include a first press fit portion which comes into contact with and is pressed against the inner wall surface on the first imaginary plane, a second press fit portion which comes into contact with and is pressed against the inner wall surface on the second imaginary plane, and an intermediate portion situated between the first press fit portion and the second press fit portion. A pressing force between the inner wall surface and the intermediate portion may be lower than a pressing force between the inner wall surface and the first press fit portion, and a pressing force between the inner wall surface and the second press fit portion.

According to the aforementioned configuration, since a pressing force between the inner wall surface and the intermediate portion is lower than a pressing force between the inner wall surface and the first press fit portion, and a pressing force between the inner wall surface and the second press fit portion, the rotary shaft portion is easily inserted into the through-hole. Therefore, the drive device is easily assembled.

With regard to the aforementioned configuration, the intermediate portion may be smaller in diameter than the through-hole.

According to the aforementioned configuration, since the intermediate portion is smaller in diameter than the through-hole, the rotary shaft portion is easily inserted into the through-hole. Therefore, the drive device is easily assembled.

With regard to the aforementioned configuration, the inner wall surface may include a first inner wall surface configured to form a contour of an insertion opening, from which the rotary shaft portion is inserted, and a second inner wall portion configured to a contour of an opening portion which is smaller in diameter than the insertion opening. The rotary shaft portion may have a smaller diameter on the second imaginary plane than the first imaginary plane. The first press fit portion may come into contact with and be pressed against the first inner wall surface. The second press fit portion may come into contact with and be pressed against the second inner wall surface.

According to the aforementioned configuration, since the rotary shaft portion is smaller in diameter on the second imaginary plane than the first imaginary plane, the rotary shaft portion is easily inserted into the opening portion through the insertion opening. Since the first press fit portion comes into contact with and is pressed against the first inner wall surface configured to form a contour of the insertion opening, from which the rotary shaft portion is inserted, and the second press fit portion comes into contact with and is pressed against the second inner wall surface configured to form a contour of the opening portion which is smaller in diameter than the insertion opening, the drive gear is less likely to be tilted with respect to the orthogonal axis orthogonal to the rotational axis of the rotary shaft portion. Therefore, an excessively large load is less likely to act on the drive gear and/or the driven gear. Therefore, the power generator device has high reliability without maintenance for a long time.

With regard to the aforementioned configuration, the rotary shaft portion may include a shaft which extends through the insertion hole, and a plate member connected to a distal end surface of the shaft. The plate member may project in a radial direction of the shaft from the distal end surface to form the second press fit portion. The shaft may include the first press fit portion formed at a position away from the distal end surface.

According to the aforementioned configuration, since the plate member connected to the distal end surface of the shaft projects in a radial direction of the shaft from the distal end surface to form the second press fit portion and the shaft includes the first press fit portion formed at a position away from the distal end surface, the drive gear is less likely to be tilted with respect to the orthogonal axis orthogonal to the rotational axis of the rotary shaft portion. Therefore, an excessively large load is less likely to act on the drive gear and/or the driven gear. Accordingly, the power generator device has high reliability without maintenance for a long time.

With regard to the aforementioned configuration, the first and second imaginary planes may be situated at both ends of an overlap region in which the rotary shaft portion overlaps with the drive gear.

According to the aforementioned configuration, since the first and second imaginary planes are situated at both ends of the overlap region in which the rotary shaft portion overlaps with the drive gear, the drive gear is less likely to be tilted with respect to the orthogonal axis orthogonal to the rotational axis of the rotary shaft portion. Therefore, an excessively large load is less likely to act on the drive gear and/or the driven gear. Accordingly, the power generator device has high reliability without maintenance for a long time.

A drive device according to another aspect of the present invention drives a driven gear situated on a movable portion of a power generator device which generates electric power according to a change in a flow direction of fluid. The drive device includes a drive gear configured to mesh with the driven gear; and a drive portion including a rotary shaft portion inserted into a through-hole which is formed in the drive gear. At least one of the rotary shaft portion and the drive gear includes a press fit structure which suppresses a tilt of the drive gear with respect to an orthogonal axis orthogonal to a rotational axis of the rotary shaft portion.

According to the aforementioned configuration, since at least one of the rotary shaft portion and the drive gear has the press fit structure in which a tilt of the rotary shaft portion with respect to the orthogonal axis orthogonal to the rotational axis of the rotary shaft portion is suppressed, the drive gear is less likely to be tilted with respect to the orthogonal axis orthogonal to the rotational axis of the rotary shaft portion. Therefore, an excessively large load is less likely to act on the drive gear and/or the driven gear. Accordingly, the power generator device has high reliability without maintenance for a long time.

The principles of the aforementioned embodiments are advantageously used in driving a power generator device including a movable portion and configured to generate electric power according to a change in the flow direction of fluid.

## Claims

1. A drive device (100; 100C) for driving a driven gear situated on a movable portion of a power generator device (WML) which generates electric power under a change in a flow direction of fluid, the drive device (100; 100C) comprising:
a drive gear (200B) configured to mesh with the driven gear, the drive gear (200B) being formed with a through-hole; and
a drive portion including a rotary shaft portion (300B) inserted into the through-hole of the drive gear (200B) and a drive source being configured to generate a driving force for rotating the rotary shaft portion (300B), the rotary shaft portion (300B) being connected to the drive gear (200Bby spline connection or key connection, the driving force being transmitted from the rotary shaft portion (300B) to the drive gear (200B),
wherein the drive gear (200B) includes an inner wall surface which forms a contour of the through-hole and which comprises a first inner wall surface portion (241), a second inner wall surface portion (251) and a third inner wall surface portion (261) situated between the first and the second inner wall surface portions, and
wherein the rotary shaft portion (300B) includes a shaft (340) which extends through the through-hole, and a plate member (350) connected to a distal end surface (343) of the shaft (340), and
wherein the rotary shaft portion (300B) includes a first press fit portion (342) which comes into contact with and is pressed against the first inner wall surface portion (241) of the drive gear (200B) in a direction orthogonal to a rotational axis (RAX) of the rotary shaft portion (300B) on a first imaginary plane (PPI; 221) orthogonal to the rotational axis (RAX),
wherein the shaft (340) includes the first press fit portion (333; 342) formed at a position away from the distal end surface (343);
**characterized by** a second press fit portion (331; 350) which comes into contact with and is pressed against the inner wall surface (210; 241; 251; 251B) of the drive gear on a second imaginary plane (PP2; 222) away from the first imaginary plane (PP1; 221) in an extending direction of the rotational axis (RAX), and an intermediate portion (332) situated between the first press fit portion (333, 342) and the second press fit portion (331; 350), wherein a pressing force between the inner wall surface (210; 241; 251; 251 B) and the intermediate portion (332) is lower than a pressing force between the inner wall surface (210; 241; 251; 251 B) and the first press fit portion (333, 342), and a pressing force between the inner wall surface (210; 241; 251; 251 B) and the second press fit portion (331; 350), and wherein
a recessed portion is formed by the second inner wall surface portion (251B) in cooperation with the third inner wall surface portion (261) and the plate member (350) is situated in the recessed portion, and
a diameter of the plate member (350) is slightly larger than the inner diameter of the second inner wall surface portion (251B) of the recessed portion and the plate member (350) projects in a radial direction of the shaft (340) from the distal end surface (343) to form the second press fit portion (350).

2. The drive device (100; 100C) according to Claim 1, wherein the intermediate portion (341) is smaller in diameter than the through-hole.

3. The drive device (100; 100C) according to claim 1 or 2,
wherein the first imaginary plane (PP1; 221) and the second imaginary plane (PP2: 222) are situated at both ends of an overlap region in which the rotary shaft portion (300B) overlaps with the drive gear (200B).

## Patentansprüche

1. Antriebsvorrichtung (100; 100C) zum Antreiben eines angetriebenen Zahnrades, das sich an einem beweglichen Abschnitt einer Stromerzeugungsvorrichtung (WML) befindet, die bei einer Änderung eine Strömungsrichtung von Fluid elektrischen Strom erzeugt, wobei die Antriebsvorrichtung (100; 100C) umfasst:
ein Antriebszahnrad (200B), das so ausgeführt ist, dass es mit dem angetriebenen Zahnrad kämmt, wobei das Antriebszahnrad (200B) mit einem Durchgangsloch versehen ist; und
einen Antriebs-Abschnitt, der einen Drehwellen-Abschnitt (300B), der in das Durchgangsloch des Antriebszahnrades (200B) eingeführt ist, sowie eine Antriebsquelle enthält, die so ausgeführt ist, dass sie eine Antriebskraft zum Drehen des Drehwellen-Abschnitts (300B) erzeugt, wobei der Drehwellen-Abschnitt (300B) mit dem Antriebszahnrad (200B) über eine Nutverbindung oder eine Keilverbindung verbunden ist und die Antriebskraft von dem Drehwellen-Abschnitt (300B) auf das Antriebszahnrad (200B) übertragen wird,
wobei das Antriebszahnrad (200B) eine Innenwandfläche enthält, die eine Kontur des Durchgangslochs bildet und die einen ersten Innenwandflächen-Abschnitt (241), einen zweiten Innenwandflächen-Abschnitt (251) sowie einen dritten Innenwandflächen-Abschnitt (261) umfasst, der sich zwischen dem ersten und dem zweiten Innenwandflächen-Abschnitt befindet, und
der Drehwellen-Abschnitt (300B) einen Schaft (340), der sich durch das Durchgangsloch erstreckt, sowie ein Plattenelement (350) enthält, das mit einer distalen Endfläche (343) des Schafts (340) verbunden ist, und
der Drehwellen-Abschnitt (300B) einen ersten Presspass-Abschnitt (342) enthält, der mit dem ersten Innenwandflächen-Abschnitt (241) des Antriebszahnrades (200B) in einer Richtung orthogonal zu einer Drehachse (RAX) des Drehwellen-Abschnitts (300B) in einer ersten imaginären Ebene (1; 221) orthogonal zu der Drehachse (RAX) in Kontakt kommt und an sie gedrückt wird,
wobei der Schaft (340) den ersten Presspass-Abschnitt (333; 342) enthält, der an einer von der distalen Endfläche (343) entfernten Position ausgebildet ist;
**gekennzeichnet durch** einen zweiten Presspass-Abschnitt (331; 350), der mit der Innenwandfläche (210; 241; 251; 251B) des Antriebszahnrades in Kontakt kommt und an sie in einer von der ersten imaginären Ebene (PP1; 221) entfernten zweiten imaginären Ebene (PP2; 222) in einer Verlaufsrichtung der Drehachse (RAX) gedrückt wird, sowie einen Zwischen-Abschnitt (332), der sich zwischen dem ersten Presspass-Abschnitt (333, 342) und dem zweiten Presspass-Abschnitt (331; 350) befindet, wobei eine Presskraft zwischen der Innenwandfläche (210; 241; 251; 251B) und dem Zwischen-Abschnitt (332) schwächer ist als eine Presskraft zwischen der Innenwandfläche (210; 241; 251; 251B) und dem ersten Presspass-Abschnitt (333, 342) und eine Presskraft zwischen der Innenwandfläche (210; 241; 251; 251B) und dem zweiten Presspass-Abschnitt (331; 350), und
ein vertiefter Abschnitt durch den zweiten Innenwandflächen-Abschnitt (251B) im Zusammenwirken mit dem dritten Innenwandflächen-Abschnitt (261) gebildet wird, und sich das Plattenelement (350) in dem vertieften Abschnitt befindet, und
ein Durchmesser des Plattenelementes (350) geringfügig größer ist als der Innendurchmesser des zweiten Innenwandflächen-Abschnitts (251B) des vertieften Abschnitts und das Plattenelement (350) in einer radialen Richtung des Schafts (340) von der distalen Endfläche (343) vorsteht und den zweiten Presspass-Abschnitt (350) bildet.

2. Antriebsvorrichtung (100; 100C) nach Anspruch 1, wobei der Zwischen-Abschnitt (341) einen kleineren Durchmesser hat als das Durchgangsloch.

3. Antriebsvorrichtung (100; 100C) nach Anspruch 1 oder 2,
wobei sich die erste imaginäre Ebene (PP1; 221) und die zweite imaginäre Ebene (PP2; 222) an beiden Enden eines Überlappungsbereiches befinden, in dem sich der Drehwellen-Abschnitt (300B) mit dem Antriebszahnrad (200B) überlappt.

## Revendications

1. Dispositif d'entraînement (100; 100C) pour entraîner un pignon mené situé sur une partie mobile d'un dispositif générateur d'énergie (WML) qui génère de l'énergie électrique sous l'effet d'un changement de direction d'écoulement de fluide, le dispositif d'entraînement (100; 100C) comprenant:
un pignon d'entraînement (200B) configuré pour s'engrener avec le pignon mené, le pignon d'entraînement (200B) étant formé avec un trou traversant; et
une partie d'entraînement comprenant une partie d'arbre rotatif (300B) insérée dans le trou traversant du pignon d'entraînement (200B) et une source d'entraînement configurée pour générer une force d'entraînement pour faire tourner la partie d'arbre rotatif (300B), la partie d'arbre rotatif (300B) étant connectée au pignon d'entraînement (200B) par une connexion par cannelure ou une connexion par clavette, la force d'entraînement étant transmise de la partie d'arbre rotatif (300B) au pignon d'entraînement (200B),
dans lequel le pignon d'entraînement (200B) comprend une surface de paroi intérieure qui forme un contour du trou traversant et qui comprend une première partie de surface de paroi intérieure (241), une deuxième partie de surface de paroi intérieure (251) et une troisième partie de surface de paroi intérieure (261) située entre les première et deuxième parties de surface de paroi intérieure, et
dans lequel la partie d'arbre rotative (300B) comprend un arbre (340) qui s'étend à travers le trou traversant, et un élément de plaque (350) relié à une surface d'extrémité distale (343) de l'arbre (340), et dans lequel la partie d'arbre rotative (300B) comprend une première partie d'ajustement serré (342) qui vient en contact avec et est pressée contre la première partie de surface de paroi interne (241) de le pignon d'entraînement (200B) dans une direction orthogonale à un axe de rotation (RAX) de la partie d'arbre rotative (300B) sur un premier plan imaginaire (PP1; 221) orthogonal à l'axe de rotation (RAX),
dans lequel l'arbre (340) comprend la première partie d'ajustement serré (333; 342) formée à une position éloignée de la surface d'extrémité distale (343);
**caractérisé par** une deuxième partie d'ajustement serré (331; 350) qui vient en contact avec et est comprimée contre la surface de paroi interne (210; 241; 251; 251B) de le pignon d'entraînement sur un deuxième plan imaginaire (PP2; 222) éloigné du premier plan imaginaire (PP1; 221) dans une direction d'extension de l'axe de rotation (RAX),
et une partie intermédiaire (332) située entre la première partie d'ajustement serré (333, 342) et la deuxième partie d'ajustement serré (331; 350), dans lequel une force de pression entre la surface de paroi interne (210; 241; 251; 251 B) et la partie intermédiaire (332) est inférieure à une force de pression entre la surface de paroi interne (210; 241; 251; 251 B) et la première partie d'ajustement serré (333, 342), et à une force de pression entre la surface de paroi interne (210; 241; 251; 251 B) et la deuxième partie d'ajustement serré (331; 350),
et dans laquelle:
une partie en creux est formée par la deuxième partie de surface de paroi intérieure (251B) en coopération avec la troisième partie de surface de paroi intérieure (261) et l'élément de plaque (350) est situé dans la partie en creux, et
un diamètre de l'élément de plaque (350) est légèrement plus grand que le diamètre intérieur de la deuxième partie de surface de paroi intérieure (251B) de la partie évidée et l'élément de plaque (350) fait saillie dans une direction radiale de l'arbre (340) à partir de la surface d'extrémité distale (343) pour former la deuxième partie à ajustement serré (350).

2. Dispositif d'entraînement (100; 100C) selon la revendication 1, dans lequel la partie intermédiaire (341) a un diamètre inférieur à celui du trou traversant.

3. Dispositif d'entraînement (100; 100C) selon les revendications 1 ou 2,
dans lequel le premier plan imaginaire (PP1; 221) et le deuxième plan imaginaire (PP2; 222) sont situés aux deux extrémités d'une région de chevauchement dans laquelle la partie d'arbre rotatif (300B) chevauche le pignon d'entraînement (200B).
